# FASCICULE DE BREVET EUROPEEN

(11) **EP 4 363 933 B1**
(45) Date de publication et mention de la délivrance du brevet: **27.05.2026**
(21) Numéro de dépôt: 22736243.1
(22) Date de dépôt: 23.06.2022
(51) Int. Cl.: G04B 19/12, B29C 70/08, G04B 29/02, G04B 37/22, G04B 45/00

(54) **COMPOSANT HORLOGER EN CARBONE FORGE COLORE ET PROCEDE DE FABRICATION D'UN TEL COMPOSANT HORLOGER**
UHRKOMPONENTE AUS GEFÄRBTEM GESCHMIEDETEM KOHLENSTOFF UND VERFAHREN ZUR HERSTELLUNG SOLCH EINER UHRKOMPONENTE
HOROLOGICAL COMPONENT MADE OF COLORED FORGED CARBON AND METHOD FOR MANUFACTURING SUCH A HOROLOGICAL COMPONENT

(30) Priorité: 29.06.2021 CH 7542021
(43) Date de publication de la demande: 08.05.2024
(73) Titulaire: Manufacture d'Horlogerie Audemars Piguet SA, 1348 Le Brassus (CH)
(72) Inventeur: LE LOARER, Thibaut, 74270 Chavannaz (FR); SANCHEZ NOGUEIRA, Pedro, 36214 Vigo Pontevedra (ES)
(74) Mandataire: e-Patent SA
(86) Numéro de dépôt international: PCT/EP2022/067213
(87) Numéro de publication internationale: WO 2023/274843

(56) Documents cités:
- EP-A1- 2 896 742
- EP-A1- 3 795 341
- WO-A1-2021/099433

## Description

### Domaine technique

La présente invention concerne un composant horloger comportant au moins une portion réalisée en carbone forgé coloré comportant des fibres de carbone coupées, rendues solidaires les unes des autres par une matrice comprenant au moins une résine comme constituant, et au moins un pigment.

La présente invention concerne également un procédé de fabrication d'un bloc en carbone forgé coloré pour la réalisation d'un composant horloger.

Dans la suite du présent texte, l'expression "fibre de carbone" sera utilisée pour désigner un brin regroupant une pluralité de filaments de carbone individuels agencés les uns contre les autres sensiblement suivant une seule et même direction.

### Etat de la technique

Des matériaux composites colorés à base de résine renforcée par des fibres sont déjà connus, notamment dans le domaine de l'horlogerie, comme dans le document EP3795341A1 par exemple.

Deux approches générales sont typiquement mises en œuvre pour réaliser de tels produits.

Selon une première approche, des fibres de verres colorées sont utilisées pour renforcer une résine, éventuellement en combinaison avec des fibres de carbone noires conventionnelles. Un exemple de boite de montre réalisée selon cette approche est présenté ici: https://www.lepoint.fr/montres/sihh-2019-girard-perregaux-presente-le-carbon-glass-14-01-2019-2285643_2648.php.

Selon une deuxième approche, un pigment est dissout dans la résine utilisée pour réaliser la matrice du composé composite. Dans ce cas, le fabricant ne peut pas avoir de contrôle sur les régions du produit final qui seront effectivement colorées du fait d'une migration possible des portions de résine qui contiennent le pigment. Par ailleurs, il n'est pas non plus possible de réaliser, de manière contrôlée, un bloc composite qui présenterait au moins deux couleurs différentes du fait des déplacements de la résine constituant la matrice notamment pendant l'opération de montée en température sous pression. En effet, différentes portions colorées de la résine se mélangent les unes aux autres au cours de cette opération, donnant lieu à au moins une couleur combinée. Ainsi, l'utilisation combinée de pigments jaunes et de pigments bleus donnerait lieu à l'obtention de régions vertes dans le produit final.

A titre d'exemple, la demande de brevet WO 2021/099433 A1 divulgue un procédé de fabrication de matériaux composites du type qui vient d'être décrit. Cette demande de brevet prévoit deux variantes de réalisation du procédé de fabrication concerné. Dans un cas, des fibres de carbone ou d'aramide sont pré-imprégnées avec une résine colorée avant d'être mélangées à une matrice. Dans l'autre cas, la matrice est colorée, les fibres de carbone ou d'aramide ne l'étant pas nécessairement. Dans un cas comme dans l'autre, le pigment utilisé est dissout dans une résine et peut par conséquent migrer comme expliqué plus haut.

Par conséquent, le besoin existe toujours de pouvoir réaliser un produit composite en carbone forgé coloré de bonne qualité et dont les régions colorées sont contrôlées par le fabricant, tant au niveau de leur emplacement que de leur couleur.

Par ailleurs, on notera également que les composés à base de carbone forgé connus actuellement présentent généralement une porosité élevée conduisant à une fragilité les rendant inadaptés pour la réalisation de certains composants horlogers, notamment des composants horlogers qui pourraient subir des chocs et/ou des composants horlogers de dimensions réduites comme des poussoirs de commande par exemple.

### Divulgation de l'invention

Un but de la présente invention est de proposer une alternative aux produits composites connus de l'art antérieur en proposant un composant horloger présentant les qualités mécaniques du carbone forgé et une coloration originale dont les paramètres sont prédéfinis, donc contrôlés, par le fabricant, tant pour permettre à ce dernier d'obtenir l'aspect souhaité qu'un certain niveau de reproductibilité si nécessaire.

A cet effet, la présente invention concerne un composant horloger du type mentionné plus haut, caractérisé
par le fait que le ou les pigments se présentent sous la forme de particules solides non miscibles avec, ou non solubles dans, la ou les résines composant la matrice, et
par le fait que les particules du ou des pigments sont situées à la surface d'au moins certaines fibres de carbone et localisées dans une ou plusieurs régions prédéfinies de la portion du composant horloger.

Grâce à ces caractéristiques, la réalisation d'un composant horloger d'apparence prédéfinie est rendue possible, avec des régions colorées bien définies à l'avance, contrairement aux produits connus dont la composition conduit forcément à une apparence finale aléatoire. En outre, il est également possible, grâce à une telle composition, de réaliser un produit présentant un nombre de couleurs prédéfini, du fait que les différentes particules de pigments ne soient pas miscibles avec, ou solubles dans, la matrice. Tout mélange de couleurs est ainsi évité contrairement aux produits connus.

Suivant un mode de réalisation préféré, on peut prévoir que la ou au moins une résine de la matrice soit de type époxy.

Par ailleurs, on peut prévoir que la matrice présente une structure réticulée faisant intervenir des groupes choisis parmi le groupe comprenant les isocyanates, les isocyanates bloqués, les anhydrides, les thiols, les phénols, les amines, et les amides.

De manière préférée, on peut prévoir que les fibres de carbone aient un grammage sec compris entre 50 et 900g.m-2, plus préférablement entre 150 et 600g.m-2.

On peut également avantageusement prévoir que les fibres de carbone présentent une largeur comprise entre 1 et 15mm, préférablement entre 1 et 5mm et, éventuellement, qu'elles présentent un module d'Young supérieur à 45GPa (selon la norme ASTM D3039), préférablement supérieur à 50GPa.

Il est également possible de prévoir que les fibres de carbone soient regroupées sous la forme de brins comprenant entre 1'500 et 50'000 filaments.

Par ailleurs, on peut prévoir que les particules de pigment(s) présentent des dimensions comprises entre 20 et 100µm, préférablement entre 20 et 80µm.

De manière générale, les pigments peuvent préférablement être choisis dans le groupe comprenant les oxydes d'aluminium, les dioxydes de silicium, les micas ou leurs mélanges.

De manière générale, on peut avantageusement prévoir que le composant horloger soit un élément d'habillage pour pièce d'horlogerie, préférablement une carrure, une lunette, un fond, un organe de commande externe, notamment une couronne ou un poussoir, ou un élément de bracelet. Bien entendu, le composant horloger pourra aussi être un composant de mouvement horloger sans pour autant sortir du cadre de l'invention tel que défini par les revendications annexées.

La présente invention concerne également un procédé de fabrication d'un bloc en carbone forgé coloré, pour la réalisation d'un composant horloger, comprenant les étapes consistant à:
a) se munir de fibres de carbone coupées, imprégnées avec une première résine, à la surface desquelles sont disposées des particules solides d'au moins un pigment non miscible avec, ou non soluble dans, la première résine,
b) disposer les fibres de carbone coupées dans un moule, préférablement avec une matrice comprenant la première résine et/ou une deuxième résine, de même nature chimique que la première résine, ainsi qu'un agent de réticulation,
c) fermer le moule et y appliquer une pression négative, et
d) appliquer un cycle de montée en pression et en température adapté pour réaliser une densification et une réticulation du mélange formé à l'étape b).

De manière avantageuse, on peut prévoir que la première résine ou les première et deuxième résines présentent une viscosité supérieure à 3000mPa.s.

En outre, on peut également prévoir que le mélange comprenant la première résine ou les première et deuxième résines et l'agent de réticulation présente une viscosité supérieure à 350mPa.s.

De manière préférée, on peut prévoir que la matrice présente une température vitreuse (Tg) comprise entre 150 et 220°C.

Par ailleurs, on peut avantageusement prévoir que la matrice présente une proportion en résine comprise entre 70 et 90% en masse, préférablement entre 75 et 85%.

On peut également prévoir que le mélange formé à l'étape b) présente une proportion de fibres de carbone comprise entre 50 et 80% en masse, préférablement entre 60 et 75%.

En alternative ou en complément, on peut prévoir que le mélange formé à l'étape b) présente une proportion de pigment(s) comprise entre 0.5 et 10% en masse, préférablement entre 1 et 5%.

Par ailleurs, on peut prévoir de manière avantageuse que l'étape d) comprenne l'application d'au moins trois paliers différents en température, préférablement au moins quatre, plus préférablement au moins cinq.

De manière générale, on peut prévoir que le procédé selon l'invention comporte au moins une étape supplémentaire d'usinage du bloc obtenu après la mise en œuvre des étapes a) à d).

### Brève description des dessins

D'autres caractéristiques et avantages de la présente invention apparaîtront plus clairement à la lecture de la description détaillée d'un mode de réalisation préféré qui suit, faite en référence aux dessins annexés donnés à titre d'exemples non limitatifs et dans lesquels:
- les figures 1a et 1b représentent des schémas simplifiés illustrant une étape de mise en œuvre d'un mode de réalisation préféré du procédé selon l'invention, selon deux variantes de réalisation différentes.
- la figure 2 représente une photo d'un bloc obtenu selon l'invention et présentant plusieurs couleurs distinctes.

### Mode(s) de réalisation de l'invention

La présente invention concerne un composant horloger comportant au moins une portion réalisée en carbone forgé coloré comportant des fibres de carbone coupées, rendues solidaires les unes des autres par une matrice comprenant au moins une résine comme constituant, et au moins un pigment. Plus précisément, le composant horloger selon l'invention présente une structure telle que le pigment se présente sous la forme de particules solides non miscibles avec, ou non solubles dans, la ou les résines composant la matrice, et que les particules du ou des pigments soient situées à la surface d'au moins certaines des fibres de carbone et localisées dans une ou plusieurs régions prédéfinies de la portion concernée du composant horloger.

Des caractéristiques préférées du composant horloger selon la présente invention ainsi qu'un mode de fabrication préféré par moulage d'un bloc en carbone forgé, préférablement de porosité relativement faible pour permettre la réalisation d'un tel composant horloger de qualité élevée, vont être exposés ci-après.

De manière générale, différentes approches sont possibles dans le cadre de la présente invention pour ce qui concerne la méthode de moulage. Le moule utilisé peut présenter une forme quelconque permettant la réalisation d'un bloc qui sera ensuite usiné pour finaliser une portion de composant horloger prédéfinie ou un composant horloger entier prédéfini. En alternative, il est possible d'utiliser un moule correspondant à la forme générale de la portion du composant horloger ou du composant horloger mais dans des dimensions supérieures ("near shape"), le produit du moulage étant alors typiquement appelé "dégros" dans le domaine horloger.

Si l'utilisation d'un moule présentant directement les dimensions exactes de la pièce à obtenir n'est pas totalement exclue dans le cadre de la présente invention, elle n'est pas préférée pour les raisons suivantes: d'une part, il peut être difficile d'obtenir une bonne répartition entre les fibres de carbone et la matrice dans des angles vifs et/ou rentrants du moule, le cas échéant, et, d'autre part, la pièce obtenue après l'étape de moulage présente généralement une proportion plus importante de matrice en surface, du fait que celle-ci subisse un phénomène de fluage lors de la cuisson. Dans ce dernier cas, la pièce obtenue par moulage peut présenter un aspect de matériau plastique brillant ce qui, non seulement, n'est pas forcément adapté à la réalisation de composants horlogers de niveau de gamme supérieur, et ce qui implique une résistance aux chocs et aux rayures inférieure à celle d'une portion de matériau dans laquelle la proportion entre la matrice et les fibres de carbone serait plus équilibrée.

Comme on l'aura compris de ce qui précède, la fabrication d'un composant horloger selon l'invention implique l'utilisation de fibres de carbone coupées, c'est-à-dire de filaments de carbone regroupés sous la forme de brins de filaments coupés, ces brins étant appelés ici fibres de carbone, d'au moins une résine, notamment pour définir une matrice, et de particules solides d'au moins un pigment non miscible avec, ou non soluble dans, la matrice.

De manière générale, le procédé de fabrication d'un bloc en carbone forgé coloré, pour la réalisation d'un composant horloger selon la présente invention, comprend avantageusement les étapes consistant à:
a) se munir de fibres de carbone coupées, imprégnées avec une première résine, à la surface desquelles sont disposées des particules solides d'au moins un pigment non miscible avec, ou non soluble dans, la première résine,
b) disposer les fibres de carbone coupées dans un moule, préférablement avec une matrice comprenant la première résine et/ou une deuxième résine, de même nature chimique que la première résine, ainsi qu'un agent de réticulation,
c) fermer le moule et y appliquer une pression négative, et
d) appliquer un cycle de montée en pression et en température adapté pour réaliser une densification et une réticulation du mélange formé à l'étape b).

Les fibres de carbone utilisées dans le cadre de la mise en œuvre de la présente invention sont préférablement des fibres de carbone unidirectionnelles pré-imprégnées avec la première résine, c'est-à-dire qu'une certaine quantité de la première résine est appliquée sur les fibres de carbone pour que ces dernières présentent un pouvoir d'adhésion non nul à température ambiante. Des particules solides d'un ou plusieurs pigments peuvent ensuite être mélangées aux fibres de carbone pré-imprégnées et adhérer à la surface de ces dernières.

Une telle étape de pigmentation des fibres de carbone pré-imprégnées peut être mise en œuvre indifféremment avant ou après que les fibres de carbone soient coupées.

Les particules de pigment(s) peuvent être mêlées aux fibres de carbone pré-imprégnées de manière aléatoire ou de manière contrôlée prédéfinie.

De manière préférée, les fibres de carbone peuvent avoir un grammage à sec (sans être imprégnées) de l'ordre de 50 à 900g/m2, plus préférablement entre 150 et 600g/m2, et chacune d'elles peut comprendre un nombre de filaments de l'ordre de 1'500 à 50'000. Par ailleurs, les fibres de carbone peuvent avantageusement présenter une largeur comprise entre 1 et 15mm, plus préférablement entre 1 et 5mm, et présenter un module d'Young supérieur à 45GPa, plus préférablement supérieur à 50GPa (mesuré selon la norme ASTM D3039).

Comme mentionné ci-dessus, une seule et même résine peut être utilisée, d'une part, pour pré-imprégner les fibres de carbone et, d'autre part, pour former la matrice. En alternative, la deuxième résine utilisée pour former la matrice peut être différente de la première résine utilisée pour pré-imprégner les fibres de carbone. Dans ce cas, les deux résines devraient avoir une même nature chimique.

Par la suite, on parlera de la résine ou d'une résine, de manière générale, étant entendu que les caractéristiques préférées qui seront énoncées s'appliqueront aux deux résines, le cas échéant.

De manière préférée, la résine utilisée dans le cadre de la mise en œuvre de la présente invention est préférablement de type époxy et pourra avantageusement être incolore pour ne pas intervenir dans la coloration finale du bloc finalement obtenu. La résine présente avantageusement une viscosité relativement faible ainsi qu'une bonne mouillabilité pour pouvoir se disperser de manière homogène et permettre d'éliminer des zones d'air éventuelles qui engendreraient des régions de porosité trop importante sur le bloc finalement obtenu. Ainsi, la viscosité de la résine sera de préférence supérieure à 3000mPa.s.

De manière conventionnelle, la matrice comporte également un agent de réticulation ou agent durcisseur ("crosslinker" en anglais) qui pourra préférablement être choisi dans le groupe comprenant les isocyanates, les isocyanates bloqués, les anhydrides, les thiols, les phénols, les amines, et les amides.

De manière préférée, la matrice contient entre 70 et 90%, plus préférablement entre 75 et 85%, en masse de résine.

Le mélange comprenant la résine et l'agent de réticulation pourra préférablement être réalisé de telle manière que sa viscosité soit supérieure à 350mPa.s, et de telle manière que la température vitreuse Tg de la matrice soit comprise entre 150 et 220°C.

Pour ce qui concerne le ou les pigments utilisés, ils sont préférablement de natures à être non miscibles avec, ou non solubles dans, la matrice pour ne pas migrer lors de l'étape de cuisson et restent en surface des fibres de carbone sur lesquelles ils ont été déposés. Dans le cas où plusieurs pigments différents sont utilisés simultanément, cela permet notamment d'éviter qu'ils ne se mélangent entre eux.

Le ou les pigments peuvent préférablement être choisis dans le groupe comprenant les oxydes d'aluminium, les dioxydes de silicium, les micas et leurs mélanges. La taille des pigments, D-50, est préférablement comprise entre 20 et 100µm, plus préférablement inférieure à 80µm.

Le mélange formé à l'étape b) ci-dessus présente préférablement une proportion de fibres de carbone comprise entre 50 et 80% en masse, préférablement entre 60 et 75%.

Par ailleurs, ce mélange présente préférablement une proportion de pigment(s) comprise entre 0.5 et 10% en masse, préférablement entre 1 et 5%.

Une fois que les fibres de carbone coupées pré-imprégnées et colorées sont disposées dans un moule adéquat, avec un complément de résine éventuel pour finaliser la matrice, une mise sous vide, par exemple l'application d'une pression inférieure à la pression atmosphérique d'au moins 30mbar, par exemple 900mbar, puis un cycle de montée en pression - par exemple 4bar puis 10bar - et en température adapté pour réaliser une densification et une réticulation du mélange est appliqué, comme mentionné à l'étape d) ci-dessus.

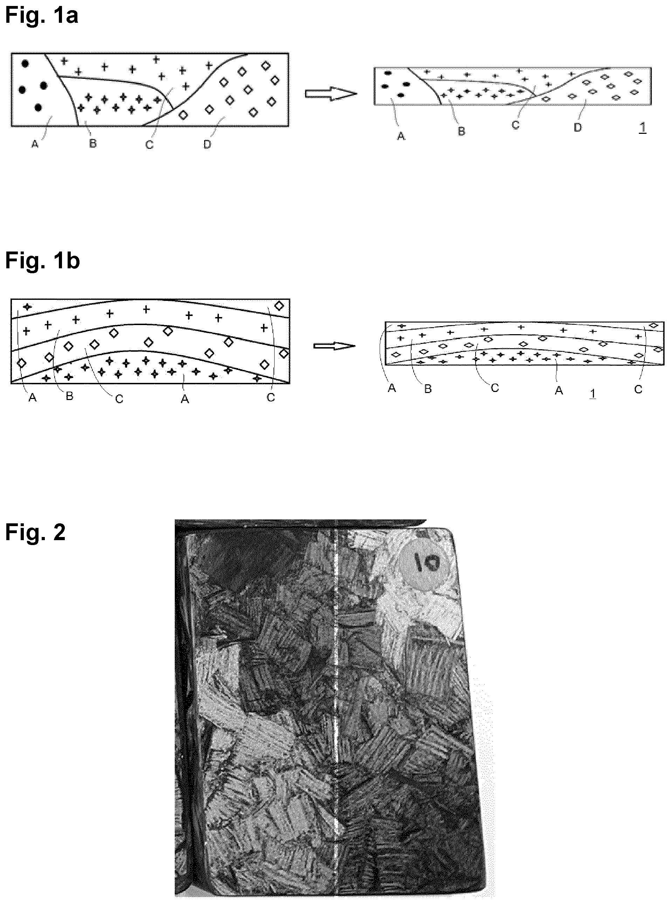

Les figures 1a et 1b illustrent schématiquement deux approches générales différentes pour la mise en place des fibres de carbone dans un moule, conduisant à deux résultats différents pour le bloc 1 finalement obtenu.

La figure 1a illustre schématiquement, sur la gauche, une disposition aléatoire de fibres de carbone dans un moule (non représenté), quatre groupes de fibres de carbone étant utilisées, des fibres A non colorés, des fibres B colorées avec un premier pigment, des fibres C colorées avec un deuxième pigment, différent du premier pigment, et des fibres D colorées avec un troisième pigment, différent des deux premiers pigments. Le bloc 1 obtenu après cuisson est illustré schématiquement sur la droite de la figure 1a. Le bloc 1 présente finalement une répartition aléatoire des différentes fibres de carbone correspondant à leur répartition dans le moule avant le cycle de cuisson. Les particules de pigments sont restées à la surface des fibres de carbone qu'elles recouvraient avant le cycle de cuisson et on ne constate aucun mélange des couleurs correspondantes. Ainsi, par exemple, dans le cas où des pigments jaunes, rouges et bleus sont utilisés, on ne constate pas la formation de région de coloration violette, orange ou verte dans le bloc 1 finalement obtenu. On constate également que le bloc 1 présente une coloration dans la masse puisque notamment les fibres de carbone colorées qui avaient été disposées au centre du mélange dans le moule avant le cycle de cuisson sont toujours situées au centre du bloc 1 finalement obtenu.

De manière similaire, la figure 1b illustre schématiquement, sur la gauche, une disposition de fibres de carbone dans un moule (non représenté) sous la forme de couches superposées, les fibres de carbone étant réparties en trois groupes, à titre illustratif non limitatif, des fibres A non colorés, des fibres B colorées avec un premier pigment et des fibres C colorées avec un deuxième pigment, différent du premier pigment. Le bloc 1 obtenu après cuisson est illustré schématiquement sur la droite de la figure 1b. Le bloc 1 présente finalement une répartition des différentes fibres de carbone A, B et C sous la forme de couches correspondant aux couches déposées dans le moule avant le cycle de cuisson.

Ainsi, il apparait que l'apparence du bloc finalement obtenu après le cycle de cuisson soit prévisible voire contrôlable, et il est possible de réaliser un composant horloger à partir du bloc 1 qui présente une répartition prédéfinie de fibres de carbone colorées.

Un exemple de cycle de cuisson, pour obtenir les propriétés préférées, à savoir une porosité inférieure à 5%, plus préférablement inférieure à 3%, encore plus préférablement inférieure à 1% et une très bonne résistance mécanique, notamment aux chocs peut être:

| Durée | démarrage | 15min | 8h | 3h | 3h | 2h | 1h | 3h |
|---|---|---|---|---|---|---|---|---|
| Température (°C) | Tamb | Tamb | 50 | 90 | 120 | 150 | 200 | Tamb |
| Pression | Patm | Patm-70mbar | 4bar | 10bar | 10bar | 8bar | 2bar | Patm |

| | | | | | | | | |
|---|---|---|---|---|---|---|---|---|
| (Tamb=température ambiante; Patm=pression atmosphérique) | | | | | | | | |

De manière générale, on pourra préférablement privilégier la mise en œuvre d'au moins deux paliers de température différente, plus préférablement d'au moins trois paliers, pour améliorer la qualité du bloc finalement obtenu en termes de porosité et de résistance mécanique.

La figure 2 représente une photo d'un exemple de bloc obtenu après le cycle de cuisson contenant différentes régions de couleurs respectives différentes. Le bloc visible sur la figure 2 a été réalisé, à titre d'exemple non limitatif, en disposant des fibres de carbone colorées dans le moule en regroupant des fibres de même couleur par régions. On obtient ainsi des régions adjacentes de couleurs différentes, sans mélange entre les couleurs utilisées.

Comme mentionné précédemment, le bloc finalement obtenu après le cycle de cuisson peut être usiné, si nécessaire, pour réaliser la portion du composant horloger souhaitée ou le composant horloger dans son entier selon le cas de figure. L'usinage pourra être réalisé par toute méthode connue adaptée, notamment par laser ou par machine CNC.

Grâce au procédé qui vient d'être décrit, il est possible de réaliser un composant horloger présentant des propriétés mécaniques de haut niveau, notamment en termes de résistance aux chocs et aux rayures, tout en présentant un aspect attractif du fait d'une apparence originale, notamment présentant des régions de différentes couleurs réparties suivant un schéma prédéfini.

Ainsi, grâce au procédé selon la présente invention, un fabricant de composants horlogers pourra proposer un composant horloger robuste et attractif, qu'il soit destiné à être intégré à un mouvement horloger ou qu'il soit destiné à la réalisation d'un élément d'habillage pour pièce d'horlogerie, préférablement une carrure, une lunette, un fond, un organe de commande externe, notamment une couronne ou un poussoir, ou un élément de bracelet.

La description qui précède s'attache à décrire un mode de réalisation préféré à titre illustratif, de manière non limitative, et l'homme du métier ne rencontrera pas de difficulté particulière pour adapter le contenu de la présente divulgation à ses propres besoins sans sortir du cadre de la présente invention tel que défini par les revendications annexées.

## Revendications

1. Composant horloger comportant au moins une portion réalisée en carbone forgé coloré comportant des fibres de carbone coupées, rendues solidaires les unes des autres par une matrice comprenant au moins une résine comme constituant, et au moins un pigment,
**caractérisé en ce que** ledit au moins un pigment se présente sous la forme de particules solides non miscibles avec, ou non solubles dans, la ou les résines composant ladite matrice, et
**en ce que** lesdites particules dudit au moins un pigment sont situées à la surface d'au moins certaines desdites fibres de carbone et localisées dans une ou plusieurs régions prédéfinies de ladite portion.

2. Composant horloger selon la revendication 1, **caractérisé**
**en ce qu'**il comporte au moins un pigment supplémentaire se présentant sous la forme de particules solides non miscibles avec, ou non solubles dans, la ou les résines composant ladite matrice, et
**en ce que** lesdites particules dudit au moins un pigment supplémentaire sont situées à la surface d'au moins certaines desdites fibres de carbone et localisées dans une ou plusieurs régions prédéfinies supplémentaires de ladite portion distinctes desdites régions prédéfinies.

3. Composant horloger selon la revendication 1 ou 2, **caractérisé en ce que** la ou au moins une résine de ladite matrice est de type époxy.

4. Composant horloger selon l'une des revendications précédentes, **caractérisé en ce que** ladite matrice présente une structure réticulée faisant intervenir des groupes choisis parmi le groupe comprenant les isocyanates, les isocyanates bloqués, les anhydrides, les thiols, les phénols, les amines, et les amides.

5. Composant horloger selon l'une des revendications précédentes, **caractérisé en ce que** lesdites fibres de carbone ont un grammage sec compris entre 50 et 900g.m-2, plus préférablement entre 150 et 600g.m-2.

6. Composant horloger selon l'une des revendications précédentes, **caractérisé en ce que** lesdites fibres de carbone présentent une largeur comprise entre 1 et 15mm, préférablement entre 1 et 5mm.

7. Composant horloger selon l'une des revendications précédentes, **caractérisé en ce que** lesdites fibres de carbone présentent un module d'Young supérieur à 45GPa (selon la norme ASTM D3039), préférablement supérieur à 50GPa.

8. Composant horloger selon l'une des revendications précédentes, **caractérisé en ce que** lesdites fibres de carbone sont regroupées sous la forme de brins comprenant entre 1'500 et 50'000 filaments.

9. Composant horloger selon l'une des revendications précédentes, **caractérisé en ce que** lesdites particules de pigment(s) présentent des dimensions comprises entre 20 et 100µm, préférablement entre 20 et 80µm.

10. Composant horloger selon l'une des revendications précédentes, **caractérisé en ce que** ledit ou lesdits pigments sont choisis dans le groupe comprenant les oxydes d'aluminium, les dioxydes de silicium, les micas ou leurs mélanges.

11. Composant horloger selon l'une des revendications précédentes, **caractérisé en ce qu'**il est un élément d'habillage pour pièce d'horlogerie, préférablement une carrure, une lunette, un fond, un organe de commande externe, notamment une couronne ou un poussoir, ou un élément de bracelet.

12. Procédé de fabrication d'un bloc (1) en carbone forgé coloré, pour la réalisation d'un composant horloger, comprenant les étapes consistant à:
a) se munir de fibres de carbone coupées, imprégnées avec une première résine, à la surface desquelles sont disposées des particules solides d'au moins un pigment non miscible avec, ou non soluble dans, ladite première résine,
b) disposer lesdites fibres de carbone coupées dans un moule, préférablement avec une matrice comprenant ladite première résine et/ou une deuxième résine, de même nature chimique que ladite première résine, ainsi qu'un agent de réticulation,
c) fermer le moule et y appliquer une pression négative, et
d) appliquer un cycle de montée en pression et en température adapté pour réaliser une densification et une réticulation du mélange formé à l'étape b).

13. Procédé selon la revendication 11, **caractérisé en ce que** ladite première résine ou lesdites première et deuxième résines sont de type époxy.

14. Procédé selon la revendication 11 ou 12, **caractérisé en ce que** ladite première résine ou lesdites première et deuxième résines présentent une viscosité supérieure à 3000mPa.s.

15. Procédé selon l'une des revendications 11 à 13, **caractérisé en ce que** ledit agent de réticulation est choisi dans le groupe comprenant les isocyanates, les isocyanates bloqués, les anhydrides, les thiols, les phénols, les amines, et les amides.

16. Procédé selon l'une des revendications 11 à 14, **caractérisé en ce que** le mélange comprenant ladite première résine ou lesdites première et deuxième résines et l'agent de réticulation présente une viscosité supérieure à 350mPa.s.

17. Procédé selon l'une des revendications 11 à 15, **caractérisé en ce que** ladite matrice présente une température vitreuse (Tg) comprise entre 150 et 220°C.

18. Procédé selon l'une des revendications 11 à 16, **caractérisé en ce que** ladite matrice présente une proportion en résine comprise entre 70 et 90% en masse, préférablement entre 75 et 85%.

19. Procédé selon l'une des revendications 11 à 17, **caractérisé en ce que** ledit mélange formé à l'étape b) présente une proportion de fibres de carbone comprise entre 50 et 80% en masse, préférablement entre 60 et 75%.

20. Procédé selon l'une des revendications 11 à 18, **caractérisé en ce que** ledit mélange formé à l'étape b) présente une proportion de pigment(s) comprise entre 0.5 et 10% en masse, préférablement entre 1 et 5%.

21. Procédé selon l'une des revendications 11 à 19, **caractérisé en ce que** lesdites particules de pigment(s) présentent des dimensions comprises entre 20 et 100µm, préférablement entre 20 et 80µm.

22. Procédé selon l'une des revendications 11 à 20, **caractérisé en ce que** ledit ou lesdits pigments sont choisis dans le groupe comprenant les oxydes d'aluminium, les dioxydes de silicium, les micas ou leurs mélanges.

23. Procédé selon l'une des revendications 11 à 21, **caractérisé en ce que** l'étape d) comprend l'application d'au moins trois paliers différents en température, préférablement au moins quatre, plus préférablement au moins cinq.

24. Procédé selon l'une des revendications 11 à 22, **caractérisé en ce qu'**il comporte au moins une étape supplémentaire d'usinage dudit bloc (1) obtenu après la mise en œuvre des étapes a) à d).

## Patentansprüche

1. Uhrenkomponente, die mindestens einen Teil aus gefärbtem geschmiedetem Kohlenstoff umfasst, der geschnittene Kohlenstofffasern enthält, die durch eine Matrix zusammengehalten werden, die mindestens ein Harz als Bestandteil und mindestens ein Pigment enthält,
**dadurch gekennzeichnet, dass** das mindestens eine Pigment in Form von festen Partikeln vorliegt, die mit dem oder den Harzen, die die Matrix bilden, unmischbar oder unlöslich sind, und
dass die Partikel des mindestens einen Pigments auf der Oberfläche mindestens einiger der Kohlenstofffasern und in einem oder mehreren vordefinierten Bereichen des Teils angeordnet sind.

2. Uhrenkomponente nach Anspruch 1, **dadurch gekennzeichnet,**
**dass** sie mindestens ein zusätzliches Pigment in Form von festen Partikeln umfasst, die mit dem oder den Harzen, aus denen die Matrix besteht, unmischbar oder unlöslich sind, und
**dass** sich die Partikel des mindestens einen zusätzlichen Pigments auf der Oberfläche mindestens einiger der Kohlenstofffasern befinden und in einem oder mehreren zusätzlichen vordefinierten Bereichen des Teils liegen, die sich von den vordefinierten Bereichen unterscheiden.

3. Uhrenkomponente nach Anspruch 1 oder 2, **dadurch gekennzeichnet, dass** das oder mindestens ein Harz der Matrix vom Epoxidtyp ist.

4. Uhrenkomponente nach einem der vorstehenden Ansprüche, **dadurch gekennzeichnet, dass** die Matrix eine vernetzte Struktur aufweist, die Gruppen umfasst, die aus der Gruppe ausgewählt sind, die aus Isocyanaten, blockierten Isocyanaten, Anhydriden, Thiolen, Phenolen, Aminen und Amiden besteht.

5. Uhrenkomponente nach einem der vorstehenden Ansprüche, **dadurch gekennzeichnet, dass** die Kohlenstofffasern ein Trockengewicht zwischen 50 und 900 g/m², vorzugsweise zwischen 150 und 600 g/m², aufweisen.

6. Uhrenkomponente nach einem der vorstehenden Ansprüche, **dadurch gekennzeichnet, dass** die Kohlenstofffasern eine Breite zwischen 1 und 15 mm, vorzugsweise zwischen 1 und 5 mm, aufweisen.

7. Uhrenkomponente nach einem der vorstehenden Ansprüche, **dadurch gekennzeichnet, dass** die Kohlenstofffasern einen Elastizitätsmodul von mehr als 45 GPa (gemäß der Norm ASTM D3039), vorzugsweise von mehr als 50 GPa, aufweisen.

8. Uhrenkomponente nach einem der vorstehenden Ansprüche, **dadurch gekennzeichnet, dass** die Kohlenstofffasern in Form von Strängen mit 1'500 bis 50'000 Filamenten zusammengefasst sind.

9. Uhrenkomponente nach einem der vorstehenden Ansprüche, **dadurch gekennzeichnet, dass** die Pigmentpartikel Abmessungen zwischen 20 und 100 µm, vorzugsweise zwischen 20 und 80 µm, aufweisen.

10. Uhrenkomponente nach einem der vorstehenden Ansprüche, **dadurch gekennzeichnet, dass** das oder die Pigmente aus der Gruppe ausgewählt sind, die Aluminiumoxide, Siliciumdioxide, Glimmer oder deren Mischungen umfasst.

11. Uhrenkomponente nach einem der vorstehenden Ansprüche, **dadurch gekennzeichnet, dass** es sich um ein Gehäuseteil für eine Uhr handelt, vorzugsweise ein Mittelgehäuse, eine Lünette, einen Gehäuseboden, ein externes Bedienelement, insbesondere eine Krone oder einen Drücker, oder ein Armbandelement.

12. Verfahren zur Herstellung eines gefärbten geschmiedeten Kohlenstoffblocks (1) zur Herstellung eines Uhrenbauteils, umfassend die folgenden Schritte:
a) Bereitstellen von geschnittenen Kohlenstofffasern, die mit einem ersten Harz imprägniert sind und auf deren Oberfläche feste Partikel mindestens eines Pigments angeordnet sind, das mit dem ersten Harz nicht mischbar oder unlöslich ist,
b) Anordnen der geschnittenen Kohlenstofffasern in einer Form, vorzugsweise mit einer Matrix, die das erste Harz und/oder ein zweites Harz derselben chemischen Art wie das erste Harz sowie ein Vernetzungsmittel umfasst,
c) Schließen der Form und Anlegen eines Unterdrucks, und
d) Anwenden eines Zyklus aus Druck- und Temperaturerhöhung, der geeignet ist, um die Verdichtung und Vernetzung der in Schritt b) gebildeten Mischung zu erreichen.

13. Verfahren nach Anspruch 11, **dadurch gekennzeichnet, dass** das erste Harz oder das erste und zweite Harz vom Epoxidtyp sind.

14. Verfahren nach Anspruch 11 oder 12, **dadurch gekennzeichnet, dass** das erste Harz oder das erste und zweite Harz eine Viskosität von mehr als 3000 mPa.s aufweisen.

15. Verfahren nach einem der Ansprüche 11 bis 13, **dadurch gekennzeichnet, dass** das Vernetzungsmittel aus der Gruppe ausgewählt ist, die aus Isocyanaten, blockierten Isocyanaten, Anhydriden, Thiolen, Phenolen, Aminen und Amiden besteht.

16. Verfahren nach einem der Ansprüche 11 bis 14, **dadurch gekennzeichnet, dass** die Mischung, die das erste Harz oder das erste und zweite Harz und das Vernetzungsmittel umfasst, eine Viskosität von mehr als 350 mPa.s aufweist.

17. Verfahren nach einem der Ansprüche 11 bis 15, **dadurch gekennzeichnet, dass** die Matrix eine Glasübergangstemperatur (Tg) zwischen 150 und 220 °C aufweist.

18. Verfahren nach einem der Ansprüche 11 bis 16, **dadurch gekennzeichnet, dass** die Matrix einen Harzanteil zwischen 70 und 90 Masseprozent, vorzugsweise zwischen 75 und 85 Masseprozent, aufweist.

19. Verfahren nach einem der Ansprüche 11 bis 17, **dadurch gekennzeichnet, dass** die in Schritt b) gebildete Mischung einen Kohlenstofffaseranteil zwischen 50 und 80 Masseprozent, vorzugsweise zwischen 60 und 75 Masseprozent, aufweist.

20. Verfahren nach einem der Ansprüche 11 bis 18, **dadurch gekennzeichnet, dass** die in Schritt b) gebildete Mischung einen Pigmentanteil zwischen 0,5 und 10 Masseprozent, vorzugsweise zwischen 1 und 5 Masseprozent, aufweist.

21. Verfahren nach einem der Ansprüche 11 bis 19, **dadurch gekennzeichnet, dass** das oder die Pigmentpartikel Abmessungen zwischen 20 und 100 µm, vorzugsweise zwischen 20 und 80 µm, aufweisen.

22. Verfahren nach einem der Ansprüche 11 bis 20, **dadurch gekennzeichnet, dass** das oder die Pigmente aus der Gruppe ausgewählt sind, die Aluminiumoxide, Siliciumdioxide, Glimmer oder deren Mischungen umfasst.

23. Verfahren nach einem der Ansprüche 11 bis 21, **dadurch gekennzeichnet, dass** Schritt d) das Anwenden von mindestens drei verschiedenen Temperaturstufen, vorzugsweise mindestens vier, noch bevorzugter mindestens fünf, umfasst.

24. Verfahren nach einem der Ansprüche 11 bis 22, **dadurch gekennzeichnet, dass** es mindestens einen zusätzlichen Bearbeitungsschritt des nach Durchführung der Schritte a) bis d) erhaltenen Blocks (1) umfasst.

## Claims

1. Horological component comprising at least one portion made of coloured forged carbon comprising cut carbon fibres, secured to one another by a matrix comprising at least one resin as component, and at least one pigment,
**characterized in that** said at least one pigment takes the form of solid particles that cannot be mixed with, or are not soluble in, the resin or resins of which said matrix is composed, and
**in that** said particles of said at least one pigment are situated on the surface of at least some of said carbon fibres and located in one or more predefined regions of said portion.

2. Horological component according to Claim 1, **characterized**
**in that** it comprises at least one additional pigment taking the form of solid particles that cannot be mixed with, or are not soluble in, the resin or resins of which said matrix is composed, and
**in that** said particles of said at least one additional pigment are situated on the surface of at least some of said carbon fibres and located in one or more additional predefined regions of said portion distinct from said predefined regions.

3. Horological component according to Claim 1 or 2, **characterized in that** the at least one resin of said matrix is of epoxy type.

4. Horological component according to one of the preceding claims, **characterized in that** said matrix has a crosslinked structure involving groups chosen from among the group comprising isocyanates, blocked isocyanates, anhydrides, thiols, phenols, amines and amides.

5. Horological component according to one of the preceding claims, **characterized in that** said carbon fibres have a dry basis weight of between 50 and 900 g.m-2, more preferably between 150 and 600 g.m-2.

6. Horological component according to one of the preceding claims, **characterized in that** said carbon fibres have a width of between 1 and 15 mm, preferably between 1 and 5 mm.

7. Horological component according to one of the preceding claims, **characterized in that** said carbon fibres have a Young's modulus greater than 45 GPa (according to the ASTM D3039 standard), preferably greater than 50 GPa.

8. Horological component according to one of the preceding claims, **characterized in that** said carbon fibres are grouped together in the form of strands comprising between 1'500 and 50'000 filaments.

9. Horological component according to one of the preceding claims, **characterized in that** said particles of pigment(s) have dimensions of between 20 and 100 µm, preferably between 20 and 80 µm.

10. Horological component according to one of the preceding claims, **characterized in that** said pigment or pigments are chosen from the group comprising aluminium oxides, silicon dioxides, micas or mixtures thereof.

11. Horological component according to one of the preceding claims, **characterized in that** it is a cladding element for a timepiece, preferably a middle, a bezel, a bottom, an external control member, notably a crown or a push-piece, or a wristlet element.

12. Method for manufacturing a block (1) made of coloured forged carbon, for the production of a horological component, comprising the steps of:
a) obtaining cut carbon fibres, impregnated with a first resin, on the surface of which are arranged solid particles of at least one pigment that cannot be mixed with, or is not soluble in, said first resin,
b) arranging said cut carbon fibres in a mould, preferably with a matrix comprising said first resin and/or a second resin, of the same chemical nature as said first resin, and a crosslinking agent,
c) closing the mould and applying a negative pressure thereto, and
d) applying a pressure-raising and temperature-raising cycle suitable for producing a densification and a crosslinking of the mixture formed in the step b).

13. Method according to Claim 11, **characterized in that** said first resin or said first and second resins are of epoxy type.

14. Method according to Claim 11 or 12, **characterized in that** said first resin or said first and second resins have a viscosity greater than 3000 mPa.s.

15. Method according to one of Claims 11 to 13, **characterized in that** said crosslinking agent is chosen from the group comprising isocyanates, blocked isocyanates, amines and amides.

16. Method according to one of Claims 11 to 14, **characterized in that** the mixture comprising said first resin or said first and second resins and the crosslinking agent has a viscosity greater than 350 mPa.s.

17. Method according to one of Claims 11 to 15, **characterized in that** said matrix has a glass transition temperature (Tg) of between 150 and 220°C.

18. Method according to one of Claims 11 to 16, **characterized in that** said matrix has a proportion of resin of between 70 and 90% by weight, preferably between 75 and 85%.

19. Method according to one of Claims 11 to 17, **characterized in that** said mixture formed in the step b) has a proportion of carbon fibres of between 50 and 80% by weight, preferably between 60 and 75%.

20. Method according to one of Claims 11 to 18, **characterized in that** said mixture formed in the step b) has a proportion of pigment(s) of between 0.5 and 10% by weight, preferably between 1 and 5%.

21. Method according to one of Claims 11 to 19, **characterized in that** said particles of pigment(s) have dimensions of between 20 and 100 µm, preferably between 20 and 80 µm.

22. Method according to one of Claims 11 to 20, **characterized in that** said pigment or pigments are chosen from the group comprising aluminium oxides, silicon dioxides, micas or mixtures thereof.

23. Method according to one of Claims 11 to 21, **characterized in that** the step d) comprises the application of at least three different temperature levels, preferably at least four, more preferably at least five.

24. Method according to one of Claims 11 to 22, **characterized in that** it comprises at least one additional step of machining of said block (1) obtained after the implementation of the steps a) to d).
